# EUROPEAN PATENT APPLICATION

(11) **EP 2 248 572 A1**
(43) Date of publication of application: **10.11.2010**
(21) Application number: 10159153.5
(22) Date of filing: 06.04.2010
(51) Int. Cl.: B01D 29/00

(54) **Reinforced, Pleated Filter Structure**

(30) Priority: 03.04.2009 US 166475 P; 01.04.2010 US 752364
(71) Applicant: Delstar Technologies INC., Middletow De Delaware 19709 (US)
(72) Inventor: Pocher, John, Austin, TX 78746 (US); Platt, Andrew, Middletown, DE 19709 (US); Bodaghi, Hassan, Berkeley, CA 94709 (US)
(74) Representative: Moore, Christopher Mark

(57) **Abstract**

A pleated filter 10 structure includes a pleated filtering substrate 12 and a pleated, polymer, mesh reinforcing sheet or netting 14 for assisting in maintaining the pleated configuration of the filtering substrate 12. The pleated, polymer, mesh reinforcing sheet or netting 14 includes a mechanically degraded polyalkylene terephthalate as the primary polymer therein. A method of making the pleated filter structure 10 includes the steps of obtaining commercial articles having been made from a high crystallinity, flexible polyalkylene terephthalate; and mechanically degrading said articles to decrease the crystallinity and increase the stiffness of the polyalkylene terephthalate and extruding the mechanically degraded articles into an extruded structure stiffer and more amorphous than the polyalkylene terephthalate in the commercial articles.

## Description

### FIELD OF INVENTION

This invention relates generally to pleated filter structures and more specifically to pleated filter structures including a reinforcing plastic netting for assisting in maintaining the pleated configuration of the construction.

### DESCRIPTION OF RELATED ART

Pleated filter structures including apertured reinforcing members are well known in the prior art. A common reinforcing member employed in such structures is made from aluminium and is formed by slitting an aluminium sheet in a predetermined pattern and then stretching the sheet to form an open cell or apertured structure. The open cell sheet is then provided with a glue or similar adhesive on the strands defining the open cells and the sheet then is adhered to a generally flat, filtering substrate, which preferably is of a fibrous structure. The laminate including the reinforcing sheet and filtering substrate is then pleated by being directed through a nip defined by meshing rolls, whereby the filtering substrate is pleated to increase the filtering surface area relative to the unpleated substrate, as is well known in the art. In this construction, the pleated aluminium sheet aids in reinforcing the structure to maintain the pleated configuration of the filtering substrate.

Aluminium mesh reinforcing sheets in the prior art filter structures are inorganic and expensive to incinerate; requiring high incineration temperatures. In addition, the edges of the aluminium sheet are quite sharp, thereby creating a possibility of injuring a person handling the reinforced filter structure.

It also has been known to employ polymer, mesh sheets manufactured from virgin polybutylene terephthalate (PBT) as a reinforcing member for pleated filtering substrates. These reinforcing sheets, as initially formed, are very flexible and, in an untreated condition, are not effective in retaining the pleated configuration in a filtering substrate to which the reinforcing sheet is attached. Accordingly, pleated filter structures employing a PBT reinforcing sheet are formed by initially applying glue to the strands of the PBT sheet, adhering the sheet to a planar filtering substrate, heating the laminate structure and, while the structure is in a heated condition, passing the laminate through pleating rolls to form the pleated laminate. Thereafter, upon cooling of the pleated structure the PBT apertured sheet becomes heat-set in its pleated configuration and aids in maintaining the pleated configuration of the filtering substrate to which it is attached. In many cases apertured PBT sheets need to be applied to both of the opposed surfaces of the filtering substrate prior to the heating and pleating operations to provide sufficient stability to the pleated laminate after the heat setting operation. Moreover, a reinforcing net formed from virgin polyester material does not have the most desirable tear strength properties for use in a pleated filter structure.

Characterization of any of the polyester materials as "virgin" in this application is intended to define a polyester material that has not been mechanically and/or thermally degraded in a manner required in the present invention. Most preferably, and as is known to those skilled in the art, virgin polyester material does not include substantial impurities in it.

From the above discussion it should be apparent that the use of prior art, virgin PET/PBT has a significant deficiency in that it needs to be heat set in order to provide its reinforcing function. Moreover, netting made from such virgin PBT does not include the most desirable tear strength properties for use in a pleated filter structure. Stating this another way, the virgin PBT sheet or netting is not capable of retaining a pleated configuration when formed into a pleated configuration in a cold state, to assist in maintaining a filtering substrate to which it is attached in a pleated configuration, and also does not impart the most optimum tear properties to the filtering substrate.

Thermal and mechanical molecular degradation of polyesters as a function of shear rate, heat and hydrolysis is known in the art. Such degradation occurs, to some extent, during the extrusion of virgin polyester to make a variety of articles, such as injection molded, extrusion molded and blow molded articles, e.g., containers or bottles. In order to achieve the desired flexibility to manufacture the above-identified molded articles the extrudate needs to possess a relatively high degree of crystallinity. The thermal and mechanical degradation in the polyester are the major contributors to the degree of crystallinity and are the most prone to heat degradation at commercial extrusion temperatures, which often exceed 20 C over the resin melting point. The benzene rings, which are attached to the ester groups, are the major molecule backbone and contributor of rigidity and stiffness when a product is made from polyesters. Such degradation results in a reduction in crystallinity, which in turn increases the stiffness of the extrudate. In the formation of polyester films or non-woven polyester netting, the desired crystallinity for achieving flexibility in the films or in the fibers of the non-woven netting commonly is achieved by orienting the films or fibers as they leave the extruder and, if the films are quenched after being oriented, employing a quenching temperature above the glass transition temperature of the polyester. These flexible structures have been utilized for a number of applications, and as described above, have been employed as a heat-set, reinforcing netting for a pleated filter structure.

### BRIEF SUMMARY OF THE INVENTION

A pleated filter structure includes a pleated filtering substrate and a pleated, polymer, mesh reinforcing sheet, which preferably is a non-woven, filament netting for assisting in maintaining the pleated configuration of the filtering substrate; **characterized in that** the pleated, polymer, mesh reinforcing sheet or netting includes a mechanically degraded polyalkylene terephthalate as the primary polymer therein, generally known as post consumer PET.

Preferably, polyalkylene terephthalate articles are mechanically/thermally degraded after use to provide the mechanically degraded polyalkylene terephthalate employed in the pleated, polymer, mesh reinforcing sheet. As is known to those skilled in the art, such mechanically degraded polyalkylene terephthalate includes impurities that are not present in virgin polyester resins.

In a preferred embodiment the polyalkylene terephthalate is either PBT or PET; most preferably PET.

In a preferred embodiment of this invention the polyalkylene terephthalate is a thermoplastic material having a melting point no higher than 350° C; more preferably no higher than 265° C and most preferably in the range of about 240° C to about 265° C.

In a preferred embodiment of this invention the hole size of the mesh reinforcing sheet or netting is in the range of 1 strand/inch to 25 strands per inch; more preferably in the range of 1 strand per inch to 15 strands per inch and most preferably in the range of 2 strands per inch to 6 strands per inch

In a preferred method of this invention a relatively stiff, plastic netting capable of being pleated in an ambient temperature condition and maintaining the pleated configuration to support the pleated configuration of a filter substrate to which the netting is attached is formed by the steps of initially extruding a highly crystalline, flexible polyester material; forming commercial articles from said flexible polyester material (e.g., a bottle or container); thereafter mechanically degrading formed commercial articles to reduce the crystallinity of the polyester and increase its stiffness, thereafter extruding the mechanically degraded polyester into a non-woven sheet or into fibers forming a non-woven netting; attaching the netting to a filtering substrate and then pleating the laminate without the application of heat. DSC analysis of the netting shows typical crystallinity between 5 and 20% whereas PET bottles range up to 40%.

Although raw or virgin polyester is a non-Newtonian fluid as melted at a low shear rate (which occurs in the extruder during an extrusion process) its rheological property can be modified during extrusion and processing in order to produce fibers of a non-woven netting with a low degree of crystallinity and stiffer structural morphology. In the present invention mechanically and thermally degraded polyester recycled resin is extruded, preferably into layers of overlapping fibers to form a non-woven netting, and the netting is quenched below the polyester glass transition temperature of 67C. This freezes the structure to prevent a high degree of crystallinity; thereby resulting in a highly amorphous, stiff plastic netting capable of maintain a pleated configuration imparted to it without the application of heat, to thereby provide reinforcement of the pleated construction of a laminated filter structure including the netting and a filtering substrate.

This invention will be described by way of example only in conjunction with the following drawings in which like reference numerals designate like elements and wherein:
Fig. 1 is a schematic plan view of a filter structure of this invention, prior to being pleated;
Fig. 2 is an end elevational view of the filter structure illustrated in Fig. 1; and
Fig. 3 is an end elevational view of the completed filter structure in its final, pleated configuration.

Referring to the figures a pleated filter structure 10 in accordance with this invention includes a filtering substrate 12 to which is attached an apertured, or mesh polymer reinforcing sheet 14.

As used in this application reference to an apertured or mesh reinforcing sheet or netting being "attached" to a filtering substrate includes either securing the sheet to the substrate through a bonding material, such as a glue, or simply placing the sheet or netting in frictional engagement with the substrate without any additional bonding material.

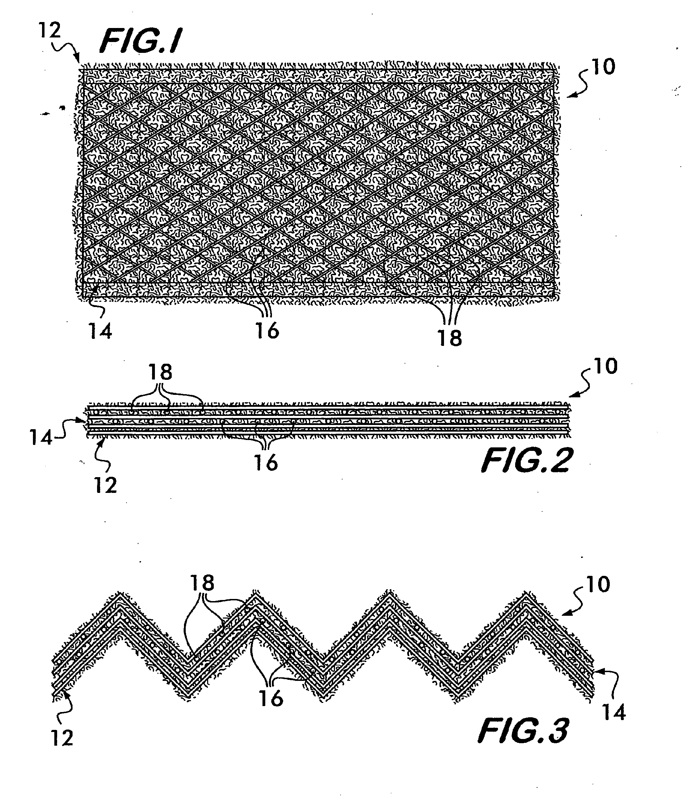

Referring to Figs. 2 and 3, in the most preferred embodiments of this invention the mesh reinforcing sheet is a non-woven, filament netting 14 formed by extruding two layers of fibers at an angle to each other and bringing the layers together so that the fibers in one layer bond to the fibers in the other layer at their crossing points to form an open mesh structure. As can be seen best in Figs. 1 and 2, the netting 14 includes two sets of strands 16, 18, with the strands 16 being in a different plane from the strands 18. The formation of such a non-woven, bi-planar structure is known in the prior art and is achieved by extruding a molten polymer into a tubular form through counter-rotating extrusion dies. Thereafter the tubular array of fibers is flattened and thereafter passed through a water bath to quench the fibers in the netting at a temperature below the glass transition temperature of polyester (i.e., below 67°C). Thereafter, the flattened tubular member is slit in the machine direction and then opened into a flat bi-planar nonwoven netting.

The open mesh polyester reinforcing member can be formed in a number of different ways; all known to people skilled in the art. For example, an extruded sheet or film can subsequently be apertured to form the open mesh structure. Alternatively, the reinforcing member can be a non-woven netting formed by extruding overlapping layers of fiber that are brought together to bond at the points of engagement between the fibers in the two layers. This latter structure is the most preferred for use in this invention and therefore the remaining disclosure will be directed to this preferred embodiment.

As illustrated in Fig. 3, in the completed filter structure both the apertured netting 14 and the filtering substrate 12 are in a pleated configuration, and the apertured reinforcing netting functions to aid in maintaining the pleated configuration of the filtering substrate to which it is attached.

The specific composition of the filtering substrate 12 does not constitute a limitation on the broadest aspects of this invention. In particular, the filtering substrate 12 can be made from a wide variety of materials and in a wide variety of configurations; depending upon the application in which the filtering substrate is intended to be used. For example, the substrate 12 can be made from a combination of staple fibers, continuous filaments, membranes and films. In addition, the filtering substrate 12 can be formed as a laminate or combination of multiple layers, such as layers of spun bond and/or melt blown materials, and the various layers can be made from a variety of polymers, e.g., polyesters, Nylon (RTM), etc.

Suffice it to state that this invention relates to pleated filter structures 10 wherein the filtering substrate 12, by itself, desirably needs to be reinforced in order to retain a desired pleated configuration in the filter structure 10. Applicant has surprisingly found that a polyester, apertured, non-woven, filament netting 14 formed from mechanically degraded polyester by any desired process, such as by mechanical shredding or grinding, provides a stiff, amorphous structure that is capable of being attached to a planar filtering substrate 12 and thereafter, without heating, being directed through a pleating operation, e.g., meshing rolls, to form the filtering substrate 12 and reinforcing netting 14 into a pleated configuration, as illustrated in Fig. 3. Significantly, the mechanically pleated reinforcing netting 14 is capable of maintaining its pleated configuration and also assisting in maintaining the pleated configuration of the filtering substrate 12, without the need to provide a heat-setting operation, as is the case with prior art polymer nettings made from virgin polyester material. In preferred embodiments of this invention the mechanically degraded polyester material is a thermoplastic material having a melting point that is no higher than 350° C; more preferably no higher than 265° and most preferably in the range of 240° to 265° C.

In a preferred embodiment of this invention the mechanically degraded polyester material is a polyalkylene terephthalate, such as polyethylene terephthalate (PET) and is obtained by recycling articles made from PET after they have been used. For example, plastic containers made from virgin PET, such as 2 liter carbonated beverage bottles are an excellent source of PET material to be subsequently mechanically degraded, e.g., by shredding or grinding, to provide the polyester polymer for manufacturing the apertured reinforcing sheeting or netting, e.g., non-woven sheeting or netting. It should be noted that although plastic PET containers, as well as other plastic articles, do employ a extrusion process in the manufacturing operation, the whole thrust of the extrusion process is to create a crystalline, flexible polyester capable of being formed into a desired article, without cracking or breaking. Thereafter, in accordance with this invention, those articles are mechanically shredded, which results in the formation of a more amorphous, relatively stiff, plastic netting 14, as will be explained in greater detail hereinafter. Moreover, the plastic netting 14 employed in this invention has a tear strength almost twice that of a plastic netting made from virgin PET material. (ASTM 5734-95). This translates into a finished, pleated filter structure that is more easily manufactured and more durable in use.

Although virgin PET prior to being used in another article can be mechanically degraded to provide the polymer source for making the apertured reinforcing netting 14 utilized in the present invention, it is much more desirable and environmentally friendly to recycle PET products previously employed as useful articles, e.g., as containers, after they have been used for their intended purpose. Moreover, previously employed PET products include greater impurities in them than the PET resin prior to use. The inclusion of more impurities provides enhanced properties. Since these post consumer resins are separated from trash recycle streams, it is inevitable that they will contain extraneous compounds that are not contained in virgin polyester polymerized from very pure raw materials. These impurities such as but not limited to, pigments, other polymers, foreign matter etc will also tend to inhibit crystallinity as they will typically disrupt the crystalline lattice as it tries to form.

Although the preferred embodiment of this invention employs PET as the mechanically degraded polyalkylene terephthalate, the inventor believes that other mechanically degraded polyalkylene terephthalates, such as polybutylene terephthalate (PBT), for example, can be employed to manufacture the reinforcing netting 14 for pleated filter structures 10 of the present invention.

In accordance with preferred embodiments of this invention the apertured, reinforcing netting 14 of this invention has a hole size in the range of 2 to 25 strands per inch; more preferably in the range of 2 to 15 strands per inch and most preferably in the range of 2 to 6 strands per inch.

In one specific embodiment of this invention a reinforcing mesh, plastic netting 14 formed from mechanically degraded PET initially obtained from used articles, such as PET containers, had a hole size of approximately 4 strands per inch in one direction (e.g., 16) and approximately 3 strands per inch in an opposed, angular direction (e.g., 18).

While not wishing to be bound to any specific theory as to why apertured reinforcing netting 14 formed from mechanically degraded polyester has the capability of retaining a pleated configuration without heating, whereas similar apertured netting made from virgin (i.e., not mechanically degraded) polyester does not have that capability, it is believed that the mechanical degradation of the polyester breaks the carbon-carbon bonds of the alkylene groups in the polyester to thereby make the structure more amorphous and stiffer than the virgin material. In particular, in PET the mechanical breaking of the carbon-carbon bonds reduces the crystallinity to 40 to 45 percent from an initial value (prior to degradation) approaching about 65 percent. As noted earlier, the more amorphous structure is stiffer, and therefore capable of retaining its pleated configuration without being heat set.

In accordance with one method of forming the pleated filter construction of this invention an apertured netting made from mechanically degraded PET (either a monoplanar or bi-planar structure) is directed onto a surface of a filtering substrate, without bonding, and the composite structure is then passed through a pleating station to thereby pleat both the reinforcing netting and the filtering substrate. Even without gluing the netting 14 to the filtering substrate 12 prior to the pleating operation, the pleated reinforcing netting is capable of maintaining the pleated configuration of the filtering substrate.

As noted earlier, in accordance with a preferred method of this invention the source of the PET that subsequently is degraded preferably is from a prior-used, commercial article, e.g., bottle or container, that initially was formed from a crystalline, flexible PET extrudate. Such a source of PET has greater impurities in it than PET that has not previously been processed into a commercial article. The inclusion of such greater impurities is highly desirable because they act as nucleation sites for crystal formation thereby increasing the crystallinity of the resin.

The reinforcing apertured netting 14 of this invention preferably is a non-woven netting manufactured in the same manner as prior art apertured non-woven netting made from virgin polyester. Such prior art aperture non-woven netting structures are available from Delstar Technologies, Inc. in Middletown, DE under various trademarks, including Delnet and Naltex. The preferred, bi-planar structure illustrated at 14 in the drawings is made by the same extrusion process as prior art Naltex non-woven netting made from a virgin polyalkylene terephthalate.

Open mesh, extruded non-woven netting 14 of this invention can easily be formed from mechanically degraded polyalkylene terephthalate, such as PET, by initially forming the mechanically degraded PET into pellets in a manner well known in the art and then directing the pellets into an extruder to be heated and extruded into the fibers forming the apertured net structure.

As set forth above, applicant believes that the mechanical degrading of polyalkylene terephthalate, e.g., PET and possibly other polyester structures, results in a breaking of the carbon-carbon bonds in the alkylene originating groups (e.g., the ethylene groups in PET or the butylene groups in PBT) to thereby provide a more amorphous and stiffer structure than the polyalkylene terephthalate prior to being mechanically degraded. Due to the presence of the benzene rings to which the ester groups are attached in this more amorphous structure, the nonwoven netting 14 is more rigid, or stiffer, than a netting structure made from the same polyalkylene terephthalate, but prior to mechanical degradation of that polyester. In particular, the mechanically degraded polyalkylene terephthalate has been determined to have a higher initial modulus than the virgin polyester, but a lower elongation at break.

While the invention has been described with respect to various specific embodiments thereof, it should be understood that it is not intended that the invention be limited to such specific embodiments. The invention is limited only as required by the following claims.

## Claims

1. A pleated filter structure including a pleated filtering substrate and a pleated, polymer, mesh reinforcing sheet or netting for assisting in maintaining the pleated configuration of the filtering substrate; **characterized in that** the pleated, polymer, mesh reinforcing sheet or netting includes a mechanically degraded polyalkylene terephthalate as the primary polymer therein.

2. The pleated filter structure of claim 1, wherein commercial polyester articles are mechanically degraded after use to provide the mechanically degraded polyalkylene terephthalate in the pleated, polymer, mesh reinforcing sheet.

3. The pleated filter structure of claim 1 or 2, wherein the polyalkylene terephthalate is PET or PBT.

4. The pleated filter structure of claim 1 or 2, wherein the polyalkylene terephthalate is a thermoplastic material having a melting point no higher than 350°C, e.g. having a melting point no higher than 265°C.

5. The pleated filter structure of any preceding claim, wherein the polyalkylene terephthalate is a thermoplastic material having a melting point in the range of 220° C to about 265° C.

6. The pleated filter structure of any preceding claim, wherein the hole size of the mesh reinforcing sheet is in the range of 1 strand per inch to 25 strands per inch.

7. The pleated filter structure of any preceding claim, wherein the hole size of the mesh reinforcing sheet is in the range of 1 strand per inch to 15 strands per inch.

8. The pleated filter structure of any preceding claim, wherein the hole size of the mesh reinforcing sheet is in the range of 2 strands per inch to 6 strands per inch.

9. In a method of making a pleated filter structure including a pleated filtering substrate and a pleated, polymer, mesh reinforcing sheet or netting for assisting in maintaining the pleated configuration of the filtering substrate; including the following steps:
a. obtaining commercial articles having been made from polyalkylene terephthalate;
b. mechanically degrading said articles to decrease the crystallinity and increase the stiffness of the polyalkylene terephthalate; and
c. extruding the mechanically degraded articles into an extruded structure stiffer and more amorphous than the polyalkylene terephthalate in said commercial articles.

10. The method of claim 9, wherein the commercial articles include PET containers.

11. The method of claim 9 or 10, wherein the step of mechanically degrading is carried out by shredding or grinding.

12. The method of any one of claims 9 - 11, wherein the step of extruding the mechanically degraded articles is carried out to extrude an open mesh, filament netting.

13. The method of claim 12, including the additional steps of attaching the open mesh filament netting to a filtering material to form a laminate and thereafter pleating the laminate without the application of heat.

14. The method of claim 13, wherein the additional step of attaching the open mesh filament netting to the filtering material is carried out by placing the netting and filtering material in engagement with each other.

15. The method of claim 14, including the step of providing an adhesive material between the netting and filtering material to aid in maintaining the attachment of the netting to the filtering material.
